Europäisches Patentamt

European Patent Office

Office européen des brevets

(11) Numéro de publication: **0 323 366**
**A1**

# DEMANDE DE BREVET EUROPEEN

(21) Numéro de dépôt: 88403378.8

(22) Date de dépôt: 30.12.88

(51) Int. Cl.⁴: **H 01 J 35/10**
**C 04 B 35/52**

(30) Priorité: 30.12.87 FR 8718368

(43) Date de publication de la demande:
05.07.89 Bulletin 89/27

(84) Etats contractants désignés: **DE GB NL**

(71) Demandeur: **GENERAL ELECTRIC CGR S.A.**
**13, Square Max-Hymans**
**F-75015 Paris (FR)**

(72) Inventeur: **Debrouwer, Yves**
**Cabinet BALLOT-SCHMIT 84 avenue Kléber**
**F-75116 Paris (FR)**

**Jouin, Christian**
**Cabinet BALLOT-SCHMIT 84 avenue Kléber**
**F-75116 Paris (FR)**

**Penato, Jean-Marie**
**Cabinet BALLOT-SCHMIT 84 avenue Kléber**
**F-75116 Paris (FR)**

(74) Mandataire: **Ballot, Paul Denis Jacques**
**Cabinet Ballot-Schmit 84, avenue Kléber**
**F-75116 Paris (FR)**

(54) Procédé de fabrication d'une anode tournante pour tube à rayons X, et anode tournante obtenue selon ce procédé.

(57) L'invention concerne un procédé de fabrication d'une anode tournante de tube à rayons X, du type comportant un corps de base (2) sur lequel est déposée une couche de matériau cible (20) ; le corps de base (2) étant en matériau composite carbone-carbone ayant des fibres de carbone (10) imprégnées d'une matrice carbone (12).

Selon une caractéristique du procédé, la couche de matériau cible (20) est déposée sur des parties (25) des fibres (10) exemptes de matrice carbone (12).

Ceci permet d'augmenter l'adhérence de la couche (20) de matériau cible sur le corps de base (2).

EP 0 323 366 A1

## Description

## PROCEDE DE FABRICATION D'UNE ANODE TOURNANTE POUR TUBE A RAYONS X, ET ANODE TOURNANTE OBTENUE SELON CE PROCEDE

L'invention concerne un procédé pour réaliser une anode tournante de tube à rayons X, et concerne particulièrement une méthode permettant d'améliorer l'adhérence d'une couche de matériau cible déposée sur l'anode en vue de constituer une cible, la ciblé étant destinée à être soumise à un bombardement électronique afin d'obtenir un rayonnement X. L'invention concerne également une anode obtenue par la mise en oeuvre de ce procédé.

Avec les tubes à rayons X, notamment ceux utilisés pour le diagnostic médical, le rayonnement X est obtenu sous l'effet d'un bombardement électronique d'une couche d'un matériau cible, c'est à dire généralement un matériau à haut numéro atomique, réfractaire et bon conducteur de la chaleur, tel que par exemple le tungstène, le molybdène ou leurs alliages, etc...

La cible est bombardée sur une faible surface appelée foyer, qui constitue la source du rayonnement X. Les puissances instantannées importantes mises en jeu (de l'ordre de 100 KW), et les petites dimensions de ce foyer d'émission, ont conduit depuis longtemps les constructeurs à mettre l'anode en rotation, de sorte à répartir le flux thermique sur une couronne appelée couronne focale, d'aire beaucoup plus grande que le foyer.

Sur le plan thermique, le gain est d'autant plus grand que la vitesse de rotation est élevée. On note que l'utilisation de suspensions magnétiques permet, en supprimant tout contact mécanique entre les pièces en mouvement et les parties fixes du tube, d'obtenir des vitesses de rotation de l'anode très élevées.

Cependant, l'une des limites aux grandes vitesses de rotation est donnée par les risques d'éclatement des matériaux dont est constituée l'anode, ou par les risques de décollement notamment des couches de matériau cible constituant la cible soumise au bombardement électronique.

En effet, il est courant d'utiliser des anodes tournantes du type comportant un corps de base ou substrat, ayant la forme générale d'un disque, et sur lequel est déposée une (ou plusieurs) couche d'un matériau émissif de rayons X ou matériau cible, par l'intermédiaire souvent d'une couche d'accrochage. Le corps de base est couramment constitué en graphite qui présente d'excellentes caractéristiques de conductivité et de rayonnement thermique, toutefois le graphite présente une certaine fragilité mécanique qui, ainsi qu'il a été précédemment expliqué, empêche d'atteindre des vitesses de rotation très élevées.

Les auteurs de l'invention ont pensé que le graphite classique pouvait être remplacé avantageusement par un matériau composite, du type appelé carbone-carbone, dont les propriétés thermiques permettent de l'utiliser en tant que corps d'anode tournante, et dont les propriétés mécaniques autorisent des vitesses de rotation plusieurs fois plus élevées que celles qui sont possibles avec le graphite classique.

Mais l'utilisation du matériau composite carbone-carbone pose un problème qui réside en ce qu'il existe des défauts d'adhérence entre le substrat composite carbone-carbone et la couche de matériau cible formant la cible d'émission X, ou entre le substrat et la couche intermédiaire d'accrochage sur laquelle est déposée la couche de matériau cible.

Le matériau composite carbone-carbone est constitué par un tissu fibreux formé par l'entrelacement en deux ou trois dimensions de fibres de carbone, et dont les mailles sont remplies par une matrice carbone. Le coefficient de dilatation du matériau composite carbone-carbone est très faible, voisin de zéro, et par conséquent très différent du coefficient de dilatation de la plupart des matériaux cible, et notamment du tungstène, et également très différent des coefficients de dilatation des matériaux dont peut être constituée la couche intermédiaire d'accrochage, le rhénium par exemple. Il peut en résulter notamment des effets de cisaillement à l'interface entre les couches externes du matériau composite carbone-carbone, et la couche de matériau cible ou la couche intermédiaire d'accrochage.

L'invention concerne un procédé de fabrication d'une anode tournante de tube à rayons X, ayant un corps de base ou substrat, en matériau composite carbone-carbone, recouvert d'au moins une couche de matériau cible par l'intermédiaire éventuellement d'une couche d'accrochage, et dont l'agencement permet d'éviter les défauts ci-dessus cités. Ceci est obtenu en assurant un passage quasi graduel entre les propriétés mécaniques du matériau composite carbone-carbone et celles de la couche de matériau cible ; c'est à dire que l'on profite de la nature déjà hétérogène du matériau composite carbone-carbone pour y ancrer de façon progressive, le matériau cible ou métal servant à émettre des X sous un bombardement électronique. En particulier, les fibres du matériau composite carbone-carbone, qui assurent l'essentiel de sa résistance à la traction, peuvent être utilisées de façon avantageuse comme élément d'accrochage du revêtement de matériau cible.

L'invention concerne en outre une anode de tube à rayons X obtenue par la mise en oeuvre d'un tel procédé.

Selon l'invention, un procédé de fabrication d'une anode tournante pour tube à rayons X, l'anode étant du type comportant un corps de base en un matériau composite carbone-carbone constitué par un tissu de fibres de carbone imprégnées d'une matrice carbone, le procédé comportant une étape de préparation du corps de base et une étape dans laquelle au moins une couche de matériau cible est déposée sur le corps de base, la couche de matériau cible formant une cible destinée à être soumise à un bombardement électronique, est caractérisée en ce que, pour la préparation du corps de base, il consiste à prévoir des fibres de carbone exemptes de matière carbone sous des surfaces S1, S2,..., Sn destinées à être couvertes par la cible.

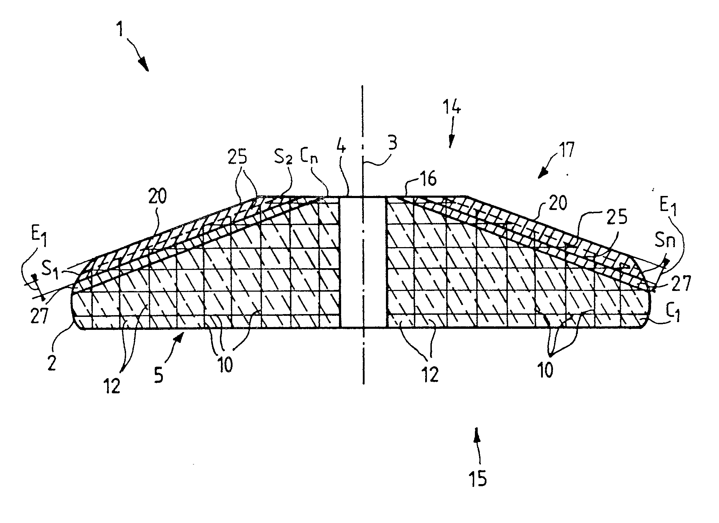

L'invention sera mieux comprise grâce à la description qui suit, faite à titre d'exemple non limitatif, et à la figure unique annexée qui montre schématiquement, par une vue en coupe, une anode tournante réalisée selon le procédé de l'invention.

La figure unique montre à titre d'exemple non limitatif, une anode tournante 1 conforme à l'invention, ayant de manière classique la forme générale d'un disque. L'anode tournante 1 comporte un corps de base 2 ou substrat, ayant un axe de symétrie 3 autour duquel l'anode tournante 1 est destinée, en fonctionnement, à être mise en rotation.

Le corps de base 2 est constitué en un matériau composite du type carbone-carbone. Le matériau composite carbone-carbone comporte un tissu fibreux 5 en fibres 10 de carbone entre lesquelles sont formées des mailles remplies d'une matrice carbone 12. Dans l'exemple non limitatif de la description, et pour plus de clarté de la figure, le tissu fibreux est représenté selon une structure à deux dimensions formant des couches C1 à Cn superposées entre les deux faces 14, 15 de l'anode 1.

Dans l'exemple non limitatif décrit, l'anode 1 a une forme générale tronçônique, c'est à dire que sa première face 14 est formée par une partie centrale 16 plane, dans laquelle est réalisée, de manière classique, un trou 4 disposé selon l'axe de symétrie 3 et servant à fixer l'anode 1 sur son support (non représenté) ; la partie centrale 16 étant entourée par une partie pentue 17 qui, généralement, est exposée au bombardement électronique, et sur laquelle est formé un foyer (non représenté). Aussi, c'est sur la partie pentue 17 que doit être constituée la cible, soit sur toute la partie pentue 17, soit seulement sur une surface limitée de cette dernière, de sorte à constituer au moins, de manière classique, une couronne focale (non représentée).

Dans l'exemple non limitatif décrit la cible est formée sur l'ensemble de la partie pentue 17, par une couche 20 de matériau cible, en tungstène par exemple ; la couche 20 de matériau cible ayant par exemple de manière traditionnelle, une épaisseur E1 de l'ordre de 500 microns.

Selon une caractéristique du procédé de l'invention, la couche de matériau cible 20 n'est déposée sur la partie pentue 17, c'est à dire sur le corps de base ou substra 2, qu'après une étape de préparation du corps de base 2, étape dans laquelle sont constitués des moyens d'ancrage sous des surfaces S1, S2, ...Sn destinées à être en contact ou recouvertes par la cible 20 ou couche de matériau cible. Ces moyens d'ancrage sont obtenus en créant des absences de matrice carbone, de sorte que des parties ou des extrémités 25 de fibres 10 sont exemptes de matrice carbone et sont ainsi libres, et peuvent constituer des éléments d'accrochage ou d'ancrage pour la couche de matériau cible 20, et/ou pour une couche intermédiaire.

Dans l'exemple non limitatif représenté à la figure, la couche de matériau cible 20 n'a pas été déposée directement sur le corps d'embase 2, mais a été déposée sur une couche intermédiaire 27 dite d'accrochage, en rhénium par exemple, dont l'adhérence est excellente avec le tungstène, la couche intermédiaire 27 d'accrochage ayant été déposée sur le substra 2 préalablement au dépôt de la couche de matériau cible 20.

Généralement, la couche intermédiaire d'accrochage 27, si elle est en rhénium notamment, a une épaisseur (non illustrée) de l'ordre de 5 microns, de sorte qu'en supposant que les extrémités libres 25 des fibres 10 ont une longueur moyenne (non représentée) de l'ordre de 10 à 100 microns par exemple, ces extrémités 25 de fibres traversent la couche intermédiaire 27 et son noyées dans la couche de matériau cible 20.Dans ces conditions, on peut penser que la couche intermédiaire 27 ne joue plus un rôle aussi important dans l'adhérence de la couche de matériau cible 20, mais que sa présence peut être tout de même nécessaire pour éviter la carburation du tungstène.

Il est à noter que le dépôt de la couche de matériau cible 20 peut s'effectuer par la mise en oeuvre d'une méthode classique, telle que par exemple, par une méthode de dépôt chimique en phase vapeur (CVD), ou encore par une méthode de dépôt électrolytique, par projection avec un chalumeau à plasma etc...

Le matériau composite carbone-carbone peut être obtenu par des imprégnations successives du tissu fibreux 10 par la matrice carbone, chaque opération étant suivie généralement d'un traitement thermique.

Selon une autre caractéristique de l'invention, la dernière imprégnation, c'est à dire l'imprégnation qui concerne les couches situées sous les surfaces S1 à Sn, n'est pas réalisée avec la matrice carbone, mais avec le matériau dont est constituée la couche intermédiaire, c'est à dire avec du rhénium ou encore avec du graphite pyrolitique dont la structure est favorable à une bonne cohésion avec le tungstène.

## Revendications

1. Procédé de fabrication d'une anode tournante pour tube à rayons X, l'anode (1) étant du type comportant un corps de base (2) en un matériau composite carbone-carbone constitué par un tissu (5) de fibres (10) de carbone imprégnées d'une matrice carbone (12), le procédé comportant une étape de préparation du corps de base (2), la couche de matériau cible (20) formant une cible destinée à être soumise à un bombardement électronique, caractérisé en ce que, pour la préparation du corps de base (2), il consiste à prévoir des fibres de carbone (10, 25) exemptes de matrice carbone (12) sous des surfaces (S1,...Sn) destinées à être couvertes par la cible (20) et, en ce qu'il comporte une étape intermédiaire qui consiste à déposer une couche intermédiaire (27) sur les surfaces (S1 à Sn) ladite couche intermédiaire ayant une épaisseur inférieure à la longueur des extrémités des fibres de carbone, la couche de matériau cible (20) étant ensuite déposée sur la couche intermédiaire (27).

2. Procédé selon la revendication 1 dans lequel le corps de base (2) en matériau composite carbone-carbone est obtenu par des imprégnations successives du tissu (5) de fibres (10) par la matrice carbone (121), caractérisé en ce que pour la dernière imprégnation, la matrice carbone (12) est remplacée par le matériau dont est constituée la couche intermédiaire (27).

3. Procédé selon la revendication 1 ou 2, caractérisé en ce que la couche intermédiaire (27) est en rhénium.

4. Procédé selon la revendication 1 ou 2, caractérisé en ce que la couche intermédiaire (27) est constituée par du graphite pyrolitique.

5. Anode tournante pour tube à rayons X réalisée par le procédé selon l'une des revendications 1 à 4, comportant un corps de base (2) en matériau composite carbone-carbone, une couche intermédiaire (27) déposée sur le corps de base (2), au moins une couche de matériau cible (20) déposée sur le corps de base (2), le matériau composite carbone-carbone comprenant des parties (25) de fibres de carbone exemptes de matrice carbone (12), caractérisée en ce que lesdites parties de fibres de carbone (25) sont noyées dans la couche intermédiaire (27) dont l'épaisseur est telle qu'elle laisse dépasser les extrémités des fibres de carbone pour servir d'accrochage à la couche de matériau cible (20).

6. Anode tournante selon la revendication 5, caractérisée en ce que la couche intermédiaire (27) est en rhénium.

7. Anode tournante selon la revendication 6, caractérisé en ce que la couche intermédiaire (27) est du graphite pyrolitique.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 117 956 (SIEMENS AG)<br>* Page 2, ligne 21 – page 3, ligne 27; page 5, ligne 25 – page 6, ligne 10; revendications 1,2; figures 2,4 *<br>--- | 1,5 | H 01 J 35/10<br>C 04 B 35/52 |
| A | GB-A-2 119 282 (GREAT LAKES CARBON CORP.)<br>* En entier *<br>--- | 1 | |
| A | GB-A-2 084 124 (GENERAL ELECTRIC CO.)<br>* Page 1, lignes 121-128; page 2, lignes 23-57; page 3, ligne 79 – page 4, ligne 13; revendications 1,4; figures 1,2 *<br>--- | 1,4,7 | |
| A | DE-A-1 907 672 (METALLWERK PLANSEE AG)<br>* Page 2, ligne 33 – page 3, ligne 18; revendication 1; figure 1 *<br>--- | 1,3,5,7 | |
| A | GB-A-2 055 245 (N.V. PHILIPS' GLOEILAMPENFABRIEKEN)<br>* Page 2, lignes 70-112; figure 1 *<br>----- | 1,4,5,7 | DOMAINES TECHNIQUES RECHERCHES (Int. Cl.4)<br><br>H 01 J<br>C 04 B |

Le présent rapport a été établi pour toutes les revendications

| Lieu de la recherche | Date d'achèvement de la recherche | Examinateur |
|---|---|---|
| LA HAYE | 06-04-1989 | GNUGESSER H.M. |

EPO FORM 1503 03.82 (P0402)